# EUROPEAN PATENT APPLICATION

(11) **EP 3 089 155 A1**
(43) Date of publication of application: **02.11.2016**
(21) Application number: 16173505.5
(22) Date of filing: 09.09.2013
(51) Int. Cl.: G09G 5/10, G09G 5/14, G06F 3/0481

(54) **DISPLAY DEVICE AND METHOD OF CONTROLLING THE SAME**

(30) Priority: 28.11.2012 KR 20120136229
(62) Divisional of application: 13183602.5
(71) Applicant: Samsung Electronics Co., Ltd., Gyeonggi-do 16677 (KR)
(72) Inventor: YOON, Sung-Jin, Gyeonggi-do 16677 (KR)
(74) Representative: HGF Limited

(57) **Abstract**

A display device and method of controlling the same is provided. The method of controlling the display device that displays multiple windows comprises displaying a first window in which a first application is running and a second window in which a second application is running, setting respective priorities for the first window and the second window, and controlling a brightness of the first window and the second window in a differential manner based on the priorities.

## Description

### BACKGROUND OF THE INVENTION

### 1. Field of the Invention:

The present invention generally relates to a display device and method of controlling the same. More particularly, the present invention relates to a display device and method of controlling the same that controls display brightness per each part of a screen in a differential manner.

### 2. Description of the Related Art:

A desktop computer has at least one display device (e.g., a monitor). A mobile terminal that uses a touch screen, e.g., a cell phone, a smartphone, or a tablet PC, also has a single display device.

A user of the desktop computer may divide the screen of the display device horizontally or vertically with a plurality of windows depending on working environments. When a web browser is opened, the user may move upward or downward on the web browser using a page-up button or page-down button of the keyboard. The user may also use a mouse to move upward or downward on the web page by scrolling a scroll bar on the side of the screen with the mouse cursor. The user may also move to the top of the web page by selecting a 'top' or 'home' button represented in a text form or as an icon at the bottom of the web page.

Compared with the desktop computer, the mobile terminal has a limited size screen as well as input constraints. Unlike the desktop computer, the mobile terminal has difficulty dividing the screen.

The mobile terminal may store and run default applications installed therein at a manufacturing stage and optional applications downloaded on the Internet from application sales sites (e.g., application stores). Optional applications may be developed by general developers and registered in the sales sites. In this respect, anyone can freely develop and sell his/her application through an application sales site to a user of a mobile terminal. Hundreds of thousands of free or paid applications are now available for current mobile terminals.

Even though such applications that interest consumers and satisfy their needs are available to the mobile terminal, the mobile terminal has difficulty in displaying multiple applications because of its limited display size and User Interface (UI) constraint. Accordingly, the user may experience inconveniences in running the multiple applications in the user's mobile terminal. For example, when the user runs an application in the user's mobile device, the application occupies the full screen. As a result, to run another application, the currently running application has to be first closed and then the other application needs to be selected. Running multiple applications requires cumbersome processes to repeat closing and starting applications. Methods of running multiple applications at the same time in the mobile terminal have not yet been provided.

Furthermore, there has not yet been any display device that controls brightnesses of multiple windows in which respective applications are running, in a differential manner. There is also a need for a display device that controls brightnesses of views in a single application, in the differential manner. Thus far, uniform brightness applied to the entire screen of the mobile terminal has led to high power consumption.

The above information is presented as background information only to assist with an understanding of the present disclosure. No determination has been made, and no assertion is made, as to whether any of the above might be applicable as prior art with regard to the present invention.

### SUMMARY OF THE INVENTION

Aspects of the present invention are to address at least the above-mentioned problems and/or disadvantages and to provide at least the advantages described below. Accordingly, an aspect of the present invention is to provide a method of controlling the same that controls display brightness of each part of a screen in a differential manner.

In accordance with an aspect of the exemplary embodiments, a method of controlling a display device that displays multiple windows is provided. The method includes displaying a first window in which a first application is running and a second window in which a second application is running, setting respective priorities for the first window and the second window, and controlling a brightness of the first window and the second window in a differential manner based on the priorities.

In accordance with an example of the present invention, the setting respective priorities for the first window and the second window comprises determining a display order for the first window and the second window, and setting the priorities based on the display order.

In accordance with an example of the present invention, the setting of the respective priorities for the first window and the second window comprises placing a higher priority on a window that is placed higher in the display order.

In accordance with an example of the present invention, the controlling of the brightness of the first window and the second window in a differential manner based on the priorities comprises displaying a window having a relatively higher priority to be brighter than a window having a relatively lower priority.

In accordance with an example of the present invention, the controlling of the brightness of the first window and the second window in a differential manner based on the priorities comprises establishing a window having a top priority to have a relatively high brightness and establishing other areas than the window to have a relatively low brightness.

In accordance with an example of the present invention, the setting of the respective priorities for the first window and the second window comprises determining a user's gaze toward one of the first window and the second window, and setting priorities for the first window and the second window based on the determined user's gaze.

In accordance with an example of the present invention, the setting of the respective priorities for the first window and the second window comprises placing a top priority on a window toward which the user's gaze is directed.

In accordance with an example of the present invention, the setting of the respective priorities for the first window and the second window comprises establishing the window having the top priority to have a relatively high brightness and establishing other areas to have a relatively low brightness.

In accordance with another aspect of the present invention, a display device that displays multiple windows is provided. The display device includes a display unit that displays a first window in which a first application is running and a second window in which a second application is running, and a controller configured to set respective priorities for the first window and the second window and to control a brightness of the first window and the second window in a differential manner based on the priorities.

In accordance with an example of the present invention, the controller is configured to determine display order of the first window and the second window and set the priorities based on the display order.

In accordance with an example of the present invention, the controller is configured to place a higher priority on a window that is placed higher in the display order.

In accordance with an example of the present invention, the controller is configured to display a window having a relatively higher priority to be brighter than a window having a relatively lower priority.

In accordance with an example of the present invention, the controller is configured to establish a window having a top priority to have a relatively high brightness and establish other areas than the window to have a relatively low brightness.

In accordance with an example of the present invention, the display device further comprises a camera unit, wherein the controller is configured to determine a user's gaze toward one of the first window and the second window based on an image captured by the camera unit, and to set priorities for the first window and the second window based on the determined user's gaze.

In accordance with an example of the present invention, the controller is configured to place a top priority on a window toward which the user's gaze is directed.

In accordance with another aspect of the present invention, a method of controlling a display device is provided. The method includes displaying an application screen that includes multiple objects, setting priorities for the multiple objects, and controlling a brightness of the multiple objects in a differential manner based on the priorities.

In accordance with another aspect of the present invention, a method of controlling a display device is provided. The method includes displaying an application screen, dividing the application screen into multiple areas on a predetermined basis, setting priorities for the multiple areas, and controlling a brightness of the multiple areas in a differential manner based on the priorities.

In accordance with another aspect of the present invention, a method of displaying a display device that displays multiple touch screens is provided. The method includes setting priorities for the multiple touch screens, and controlling a brightness of the multiple touch screens in a differential manner based on the priorities.

In accordance with another aspect of the present invention, a display device is provided. The display device includes a plurality of touch screens that are physically separated from each other, and a controller configured to set priorities for the plurality of touch screens and to control a brightness of the multiple touch screens in a differential manner based on the priorities.

Other aspects, advantages, and salient features of the invention will become apparent to those skilled in the art from the following detailed description, which, taken in conjunction with the annexed drawings, discloses exemplary embodiments of the invention.

### BRIEF DESCRIPTION OF THE DRAWINGS

The above and other aspects, features, and advantages of certain exemplary embodiments of the present invention will be more apparent from the following description taken in conjunction with the accompanying drawings, in which:
FIG. 1 is a schematic block diagram of an apparatus according to an exemplary embodiment of the present invention;
FIG. 2A is a conceptual diagram illustrating a screen that displays multiple windows in a free style mode according to an exemplary embodiment of the present invention;
FIG. 2B is a conceptual diagram that explains Z-order according to an exemplary embodiment of the present invention;
FIG. 2C is a conceptual diagram illustrating a screen that displays multiple windows in a split mode according to an exemplary embodiment of the present invention;
FIG. 2D is a conceptual diagram in terms of a display device that controls brightness in a differential manner according to an exemplary embodiment of the present invention;
FIG. 3A illustrates a screen that displays windows according to an exemplary embodiment of the present invention;
FIG. 3B is a conceptual diagram of a framework according to an exemplary embodiment of the present invention;
FIG. 3C illustrates a screen which explains a change in display priority according to an exemplary embodiment of the present invention;
FIG. 3D illustrates a screen that displays priority-changed windows according to an exemplary embodiment of the present invention;
FIG. 3E illustrates task stacks according to an exemplary embodiment of the present invention;
FIG. 3F illustrates display stacks according to an exemplary embodiment of the present invention;
FIG. 4 is a flowchart illustrating a method of controlling a display device according to an exemplary embodiment of the present invention;
FIG. 5 is a flowchart illustrating a method of controlling a display device according to another exemplary embodiment of the present invention;
FIGS. 6A and 6B illustrate conceptual diagrams in terms of setting priorities based on display order according to an exemplary embodiment of the present invention;
FIGS. 7A and 7B illustrate conceptual diagrams in terms of setting priorities based on a user's gaze according to an exemplary embodiment of the present invention;
FIG. 8 illustrates a conceptual diagram of a display device according to an exemplary embodiment of the present invention; and
FIG. 9 illustrates a conceptual diagram of a display device according to an exemplary embodiment of the present invention.

Throughout the drawings, it should be noted that like reference numbers are used to depict the same or similar elements, features, and structures.

### DETAILED DESCRIPTION OF EXEMPLARY EMBODIMENTS

The following description with reference to the accompanying drawings is provided to assist in a comprehensive understanding of exemplary embodiments of the invention as defined by the claims and their equivalents. It includes various specific details to assist in that understanding, but these are to be regarded as merely exemplary. Accordingly, those of ordinary skill in the art will recognize that various changes and modifications of the embodiments described herein can be made without departing from the scope and spirit of the invention. In addition, descriptions of well-known functions and constructions may be omitted for clarity and conciseness.

The terms and words used in the following description and claims are not limited to the bibliographical meanings, but are merely used by the inventor to enable a clear and consistent understanding of the invention. Accordingly, it should be apparent to those skilled in the art that the following description of exemplary embodiments of the present invention is provided for illustration purposes only and not for the purpose of limiting the invention as defined by the appended claims and their equivalents.

It is to be understood that the singular forms "a," "an," and "the" include plural referents unless the context clearly dictates otherwise. Thus, for example, reference to "a component surface" includes reference to one or more of such surfaces.

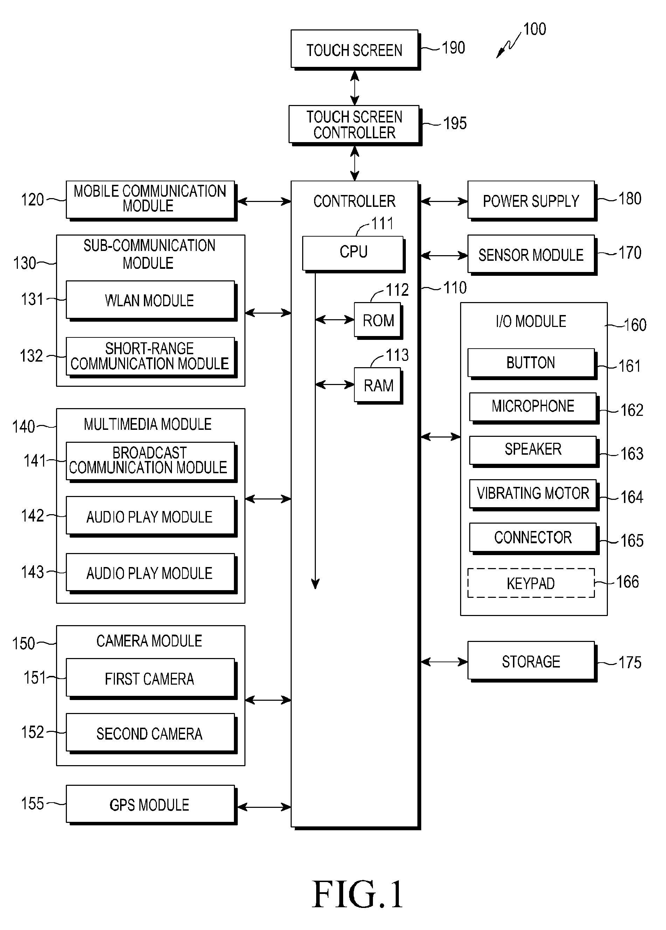

FIG. 1 is a schematic block diagram of an apparatus according to an embodiment of the present invention.

Referring to FIG. 1, the apparatus (or 'display device') 100 may be connected to an external device (not shown) via a mobile communication module 120, a sub-communication module 130, and a connector 165. The "external device" includes another device, a cell phone, a smart phone, a tablet Personal Computer (PC), and a server, all of which are not shown.

The display device 100 includes a touch screen 190 and a touch screen controller 195. The display device 100 also includes a controller 110, the mobile communication module 120, the sub-communication module 130, a multimedia module 140, a camera module 150, a Global Positioning System (GPS) module 155, an input/output module 160, a sensor module 170, a storage 175, and a power supply 180. The sub-communication module 130 includes at least one of a Wireless Local Area Network (WLAN) module 131 and a short-range communication module 132, and the multimedia module 140 includes at least one of a broadcast communication module 141, an audio play module 142, and video play module 143. The camera module 150 includes at least one of a first camera 151 and a second camera 152. The input/output module 160 includes at least one of buttons 161, a microphone 162, a speaker 163, a vibration motor 164, a connector 165, and a keypad 166.

The controller 110 may include a Central Processing Unit (CPU) 111, a Read Only Memory (ROM) 112 for storing a control program to control the display device 100, and a Random Access Memory (RAM) 113 for storing signals or data input from an outside or for being used as a memory space for working results in the display device 100. The CPU 111 may include one or more cores, such as a single core, dual cores, triple cores, or quad cores. The CPU 111, ROM 112, and RAM 113 may be connected to each other via an internal bus.

The controller 110 may control the mobile communication module 120, the sub-communication module 130, the multimedia module 140, the camera module 150, the GPS module, the input/output module 160, the sensor module 170, the storage 175, the power supply 180, the touch screen 190 (which may include first and second touch screens), and the touch screen controller 195. The touch screen 190 may also be called a display device.

The mobile communication module 120 connects the display device 100 to an external device through mobile communication using at least one-one or more-antennas (not shown) under control of the controller 110. The mobile communication module 120 transmits/receives wireless signals for voice calls, video conference calls, Short Message Service (SMS) messages, or Multimedia Message Service (MMS) messages to/from a cell phone (not shown), a smart phone (not shown), a tablet PC (not shown), or another device not shown), the phones having phone numbers entered into the display device 100.

The sub-communication module 130 may include at least one of the WLAN module 131 and the short-range communication module 132. For example, the sub-communication module 130 may include either the WLAN module 131 or the-short range communication module 132, or both.

The WLAN module 131 may be connected to the Internet in a place where there is an Access Point (AP) (not shown), under control of the controller 110. The WLAN module 131 supports the Institute of Electrical and Electronics Engineers (IEEE)'s WLAN standard IEEE802.11x. The short-range communication module 132 may perform short-range communication between the display device 100 and an image rendering device (not shown) under control of the controller 110. The short-range communication may include Bluetooth, Infrared Data Association (IrDA), etc.

The display device 100 may include at least one of the mobile communication module 120, the WLAN module 131 and the short-range communication module 132 based on the performance. For example, the display device 100 may include a combination of the mobile communication module 120, the WLAN module 131 and the short-range communication module 132 based on the performance.

The multimedia module 140 may include the broadcast communication module 141, the audio play module 142, or the video play module 143. The broadcast communication module 141 may receive broadcast signals (e.g., television broadcast signals, radio broadcast signals, or data broadcast signals) and additional broadcast information (e.g., Electric Program Guide (EPG) or Electric Service Guide (ESG)) transmitted from a broadcasting station through a broadcast communication antenna (not shown) under control of the controller 110. The audio play module 142 may play digital audio files (e.g., files having extensions, such as mp3, wma, ogg, or wav) stored or received under control of the controller 110. The video play module 143 may play digital video files (e.g., files having extensions, such as mpeg, mpg, mp4, avi, move, or mkv) stored or received under control of the controller 110. The video play module 143 may also play digital audio files.

The multimedia module 140 may include the audio play module 142 and the video play module 143 except for the broadcast communication module 141. The audio play module 142 or video play module 143 of the multimedia module 140 may be included in the controller 100.

The camera module 150 may include at least one of the first and second cameras 151 and 152 for capturing still images or video images under control of the controller 110. Furthermore, the first or second camera 151 or 152 may include an auxiliary light source (e.g., a flash (not shown)) for providing as much an amount of light as required for capturing. The first camera 151 may be placed on the front of the display device 100 and the second camera 152 may be placed on the back of the display device 100. Alternatively, the first and second cameras 151 and 152 may be arranged adjacent to each other (e.g., the distance between the first and second cameras 151 and 152 may be between 1 to 8 cm), capturing 3D still images or 3D video images.

The GPS module 155 receives radio signals from a plurality of GPS satellites (not shown) in Earth's orbit, and may calculate the position of the display device 100 by using time of arrival from the GPS satellites to the display device 100.

The input/output module 160 may include at least one of a plurality of buttons 161, the microphone 162, the speaker 163, the vibration motor 164, the connector 165, and the keypad 166.

The buttons 161 may be arranged on the front, side, or back of the housing of the display device 100, and may include at least one of power/lock button (not shown), volume button (not shown), menu button, home button, back button, and search button.

The microphone 162 generates electric signals by receiving voice or sound under control of the controller 110.

The speaker 163 may output sounds corresponding to various signals (e.g., radio signals, broadcast signals, digital audio files, digital video files or photography signals) from the mobile communication module 120, sub-communication module 130, multimedia module 140, or camera module 150 to the outside under control of the controller 110. The speaker 163 may output sounds (e.g., button-press sounds or ringback tones) that correspond to functions performed by the display device 100. There may be one or multiple speakers 163 arranged in a proper position or proper positions of the housing of the display device 100.

The vibration motor 164 may convert an electric signal to a mechanical vibration under control of the controller 110. For example, the display device 100 in a vibrating mode drives the vibration motor 164 when receiving a voice call from another device (not shown). One or more vibration motors 164 may be provided inside the housing of the display device 100. The vibration motor 164 may be driven in response to a touch activity or continuous touches of a user over the touch screen 190.

The connector 165 may be used as an interface for connecting the display device 100 to the external device (not shown) or a power source (not shown). Under control of the controller 110, data stored in the storage 175 of the display device 100 may be transmitted to the external device via a cable connected to the connector 165, or data may be received from the external device. Power may be received from the power source via a cable connected to the connector 165 or a battery (not shown) may be charged.

The keypad 166 may receive key inputs from the user to control the display device 100. The keypad 166 includes a physical keypad (not shown) formed in the display device 100 or a virtual keypad (not shown) displayed on the touchscreen 190. The mechanical keypad formed in the display device 100 may be omitted depending on the performance or structure of the display device 100.

The sensor module 170 includes at least one sensor for detecting a status of the display device 100. For example, the sensor module 170 may include a proximity sensor for detecting proximity of the user to the display device 100, an illumination sensor for detecting an amount of ambient light, or a motion sensor (not shown) for detecting an operation of the display device 100 (e.g., rotation of the display device 100, acceleration or vibration imposed on the display device 100). At least one sensor may detect the status and generate a corresponding signal to transmit to the controller 110. The sensor of the sensor module 170 may be added or removed depending on the performance of the display device 100.

The storage 175 may store signals or data input/output according to operations of the mobile communication module 120, the sub-communication module 130, the multimedia module 140, the camera module 150, the GPS module, the input/output module 160, the sensor module 170, the touch screen 190 under control of the controller 110. The storage 175 may store the control programs and applications for controlling the display device 100 or the controller 110.

The term "storage" includes not only the storage 175, but also the ROM 112, the RAM 113, or a memory card (not shown) (e.g., an SD card, a memory stick) installed in the display device 100. The storage may also include a non-volatile memory, volatile memory, hard disc drive (HDD), or solid state drive (SSD).

The power supply 180 may supply power to one or more batteries (not shown) placed inside the housing of the display device 100 under control of the controller 110. The one or more batteries power the display device 100. The power supply 180 may supply the display device 100 with the power input from the external power source (not shown) via a cable connected to the connector 165.

The touchscreen 190 may provide the user with a user interface for various services (e.g., call, data transmission, broadcasting, photography services). The touchscreen 190 may send an analog signal corresponding to at least one touch input to the user interface to the touchscreen controller 195. The touch screen 190 may receive the at least one touch from user's physical contact (e.g., with fingers including thumb) or via a touchable input device (e.g., a stylus pen). The touchscreen 190 may receive consecutive moves of the at least one touch. The touch screen 190 may send an analog signal corresponding to the consecutive moves of the input touch to the touchscreen controller 195.

As used herein, touches are not limited to physical touches by a physical contact of the user or contacts with the touchable input means, but may also include touchless (e.g., keeping a detectable distance less than 1 mm between the touch screen 190 and the user's body or touchable input means). The detectable distance from the touch screen 190 may vary depending on the performance or structure of the display device 100.

The touch screen 190 may be implemented in a resistive way, capacitive way, infrared way, or acoustic wave way.

The touch screen controller 195 converts the analog signal received from the touch screen 190 to a digital signal (e.g., XY coordinates) and transmits the digital signal to the controller 110. The controller 110 may control the touch screen 190 by using the digital signal received from the touch screen controller 195. For example, in response to the touch, the controller 110 may enable a shortcut icon (not shown) displayed on the touchscreen 190 to be selected or to be executed. The touchscreen controller 195 may also be incorporated in the controller 110.

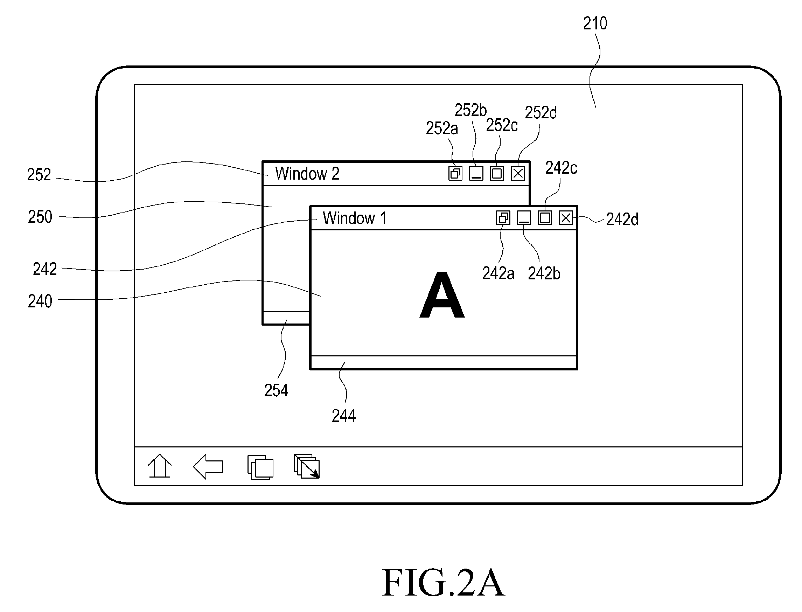

FIG. 2A is a conceptual diagram illustrating a screen that displays multiple windows in a free style mode according to an exemplary embodiment of the invention.

Referring to FIG. 2A, a first application and a second application run and are presented in layered windows of a main screen 210, (i.e., first and second windows) respectively. In the free style mode, the second window 250 is presented under the first window 240. According to an exemplary embodiment of the present invention, the second window 250 may be presented under the first window 240 at an angle toward the top-right direction of the first window 240. The first and second applications have respective places in a display order. In FIG. 2A, it is assumed that the first application precedes the second application in the display order. The controller controls the first application to be presented on top of the second application based on the display order. If areas in which to display the first application and the second application, respectively, overlap each other, the controller controls the first application to be presented while hiding the overlapped part of the second application.

The first window 240 is substantially rectangular shaped, within which the first application runs and is presented. On the top of the first window 240, a title bar 242 is formed; at the bottom, a task bar 244 is formed. In the title bar 242, a title of the first application (e.g., a web browser) is displayed. In the title bar 242, a default button 242a, a minimize button 242b, and a maximize button associated with the size of the first window 240, and a close button 242d to close the first window 240 may also be formed in order. The task bar 244 may display the running state of the first application. Alternatively, the title bar 242 and the task bar 244 may be omitted on a multi window control command.

The second window 250 is substantially rectangular shaped, within which the second application runs and is presented. On the top of the second window 250, the title bar 252 is formed; on the bottom, a task bar 254 is formed. In the title bar 252, a title of the second application (e.g., a message) is displayed. In the title bar 252, the default button 252a, the minimize button 242b, and the maximize button associated with the size of the second window 250, and the close button 242d to close the second window 250 may also be formed in order. The task bar 254 may display the running state of the second application. Alternatively, the title bar 252 and the task bar 254 may be omitted.

Many objects associated with the first and second application are presented in the corresponding window 240 or 250. The objects may include text, figures, icons, buttons, checkboxes, photos, videos, webs, maps, and the like. When the user touches the object, a predetermined function or event for the object may be performed in the application. The object may be called a view in some operating systems.

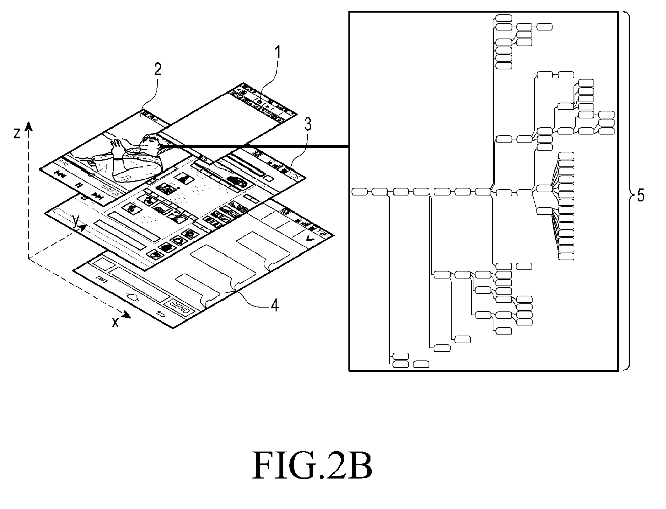

FIG. 2B illustrates a conceptual diagram of Z-order according to an exemplary embodiment of the present invention.

Referring to FIG. 2B, the Z-order may be classified into N layers with the Nth layer laid higher than the N-1th layer. There is a window for each layer in which an application is running. A first application runs in a first layered window, a second application runs in a second layered window, and a third application runs in a third layered window, thereby displaying windows in layers. The window generated last may be displayed at the top of the layers. For example, multiple windows 1 to 4 are displayed to overlap one another in the main display screen 210. The first window 1 is displayed to cover the second to fourth windows 2 to 4, the second window 2 is displayed to cover the third and fourth windows 3 and 4, and the third window 3 is displayed to cover the fourth window 4. The multiple windows 1 to 4 that overlap one another may be displayed in a predetermined order which may be referred to as the Z-order. The Z-order refers to display order of windows along the Z-axis. A layer viewer 5 may be a screen that shows the Z-order in layers. The Z-order may also be called the display order.

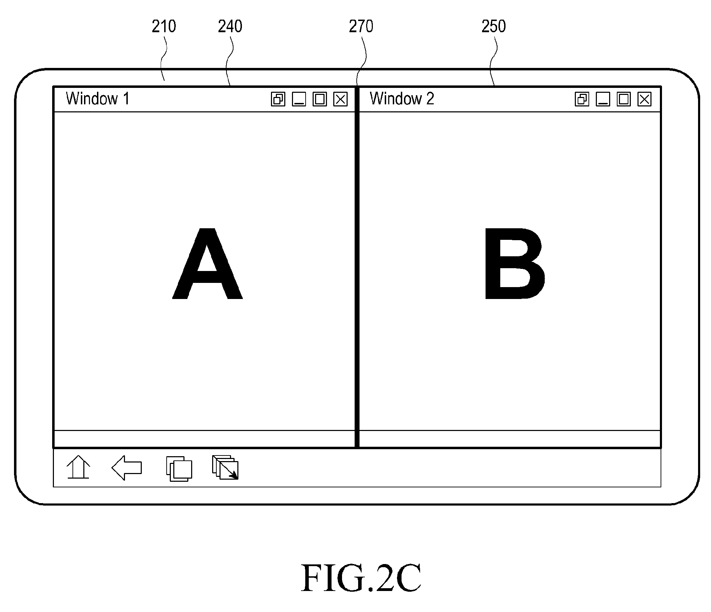

FIG. 2C is a conceptual diagram illustrating a screen that displays multiple windows in a split mode according to an exemplary embodiment of the present invention.

Referring to FIG. 2C, when the user selects the split mode, the controller 110 may run the first and second applications simultaneously and present the first and second applications in the main display screen 210 in the split mode.

In the split mode, the first window 240 and the second window 250 may be displayed not to overlap each other in the main display screen 210. With the main display screen 210 divided, the first window 240 may be presented in the left half of the main display screen 210 and the second window 240 may be presented in the right half of the main display screen 210. The first and second windows 240 and 250 are placed adjacent to each other and share a common border line 270 without overlapping. The common border line 270 is located between the first window 240 and the second window 250.

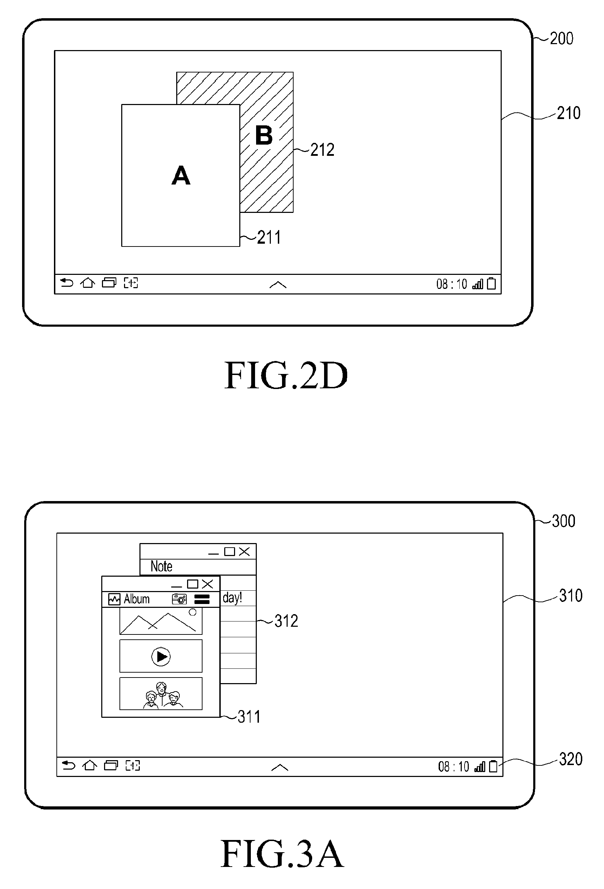

FIG. 2D is a conceptual diagram in terms of a display device that controls brightness in a differential manner according to an exemplary embodiment of the present invention.

Referring to FIG. 2D, the display device 200 displays two windows in the free style mode. The display device 200 displays a first window 211 in which an application A runs and a second window 212 in which an application B runs based on the display order. In the exemplary embodiment, a controller (not shown) of the display device 200 may place higher priority on the first window 211 than on the second window 212. As described above, since the first window 211 precedes the second window 212 in the display order, the controller may set a higher priority for the first window 211 than for the second window 212. The controller may set respective priorities for windows based on their display order.

The controller may control brightnesses of the windows in the differential manner, based on the set priorities. In the exemplary embodiment shown in FIG. 2D, the controller may set the brightness of the first window 211 to have a first brightness and the brightness of the second window 212 to have a second brightness. The first brightness may be brighter than the second brightness. The first and second brightness may be applied to the first and second windows 211 and 212, respectively, and a default brightness is applied to the wallpaper of the screen. However, this exemplary embodiment is merely illustrative. For example, the controller may control the first window 211 to have the first brightness and other areas than the first window 211 to have the second brightness. The controller may control the brightness in a differential manner even in the split mode as in FIG. 2C.

As described above, the controller may differentially control brightnesses of respective areas. In the exemplary embodiment shown in FIG. 2D, the controller set priorities based on the display order. The display order is described below with reference to FIGS. 3A to 3G.

FIG. 3A illustrates a screen that displays windows according to an exemplary embodiment of the present invention.

Referring to FIG. 3A, a display device 300 includes a touch screen 310. Multiple windows 311 and 312 are presented in the touch screen 310. At the bottom of the touch screen 310, a bottom bar 320 is displayed.

Each window may include a running screen of an application, a title bar and a control area for the application. Objects associated with the application may be displayed on the running screen of an application. The objects may include text, figures, icons, buttons, checkboxes, photos, videos, webs, maps, and the like. When the user touches the object, a predetermined function or event for the object may be performed in the application. The object may be called a view in some operating systems. The title bar may be an area in which to display an identifier of the application that is running on the window and a toolbar of the application. The control area may be an area in which to control presentation and closing of the window. For example, the control area may include a window display minimize button, a window display maximize button, and a window close button.

The applications are programs implemented independently from each other by a manufacturer of the display device 300 or an application developer. Thus, one application does not require another application to be running in advance in order to run. Similarly, when one application is closed, another application may keep running.

Those applications are distinguished from composite applications that combine various functions, e.g., a video application combined with some other functions provided by other applications (e.g., a memo function and a message communication function), in that the applications are independently implemented programs. The composite application is manufactured as a new single application to have various functions. However, the composite application is usually a paid application, and even if the user purchased and installed the composite application, functions provided by the composite application are relatively limited compared with those provided by independent individual applications.

The controller 110 controls the multiple windows 311 and 312 to overlap each other. The controller 110 may set display order for the multiple windows 311 and 312. The controller 110 may establish the window 311 to have a first place in the display order and establish the window 312 to have a second place in the display order. The controller 110 then displays the window 311 that precedes the window 312 to cover the window 312. Overlapped parts of the window 312 that is preceded by the window 311 with the window 311 are not displayed.

The controller 110 may establish a window to which the most recent control event has occurred to have the top place in the display order. For example, when the user touches the window 311, the controller 110 establishes the window 311 to have the top place in the display order.

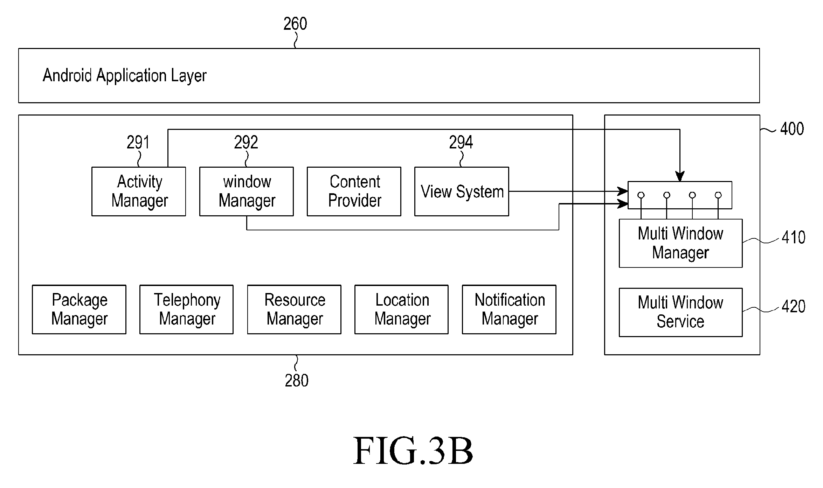

FIG. 3B is a conceptual diagram of a framework according to an exemplary embodiment of the present invention.

Referring to FIG. 3B, an activity manager 291, a window manager 292, and a view system 294 within a framework 280 may be compatible with a multi window framework 400.

The multi-window framework 400 includes a multi window manager 410 and a multi window service 420.

The activity manager 291, the window manager 292, and the view system 294 may call an Application Program Interface (API) that supports a multi window function.

A multi window manager 410 provides the user with functions of the multi window service 420 in the API form, and the manager/service structure may operate on the Inter-Process Communication (IPC) basis.

The multi window service 420 tracks the life cycle of applications that are running in the multi window and manages the size and position of each application.

The called API may manage the size, position, and visibility of each application.

In the exemplary embodiment described above, the framework may operate in a way of providing an independent multi window framework and calling an API.

In addition, an application layer 260 may directly call an API in step 400 from the multi window manager 410. Accordingly, the user may be provided with the API from the multi window manager 410 and use the API even when the user develops a new application.

As described above, exemplary embodiments of the present invention may adopt the window framework 400 and display two or more applications at the same time.

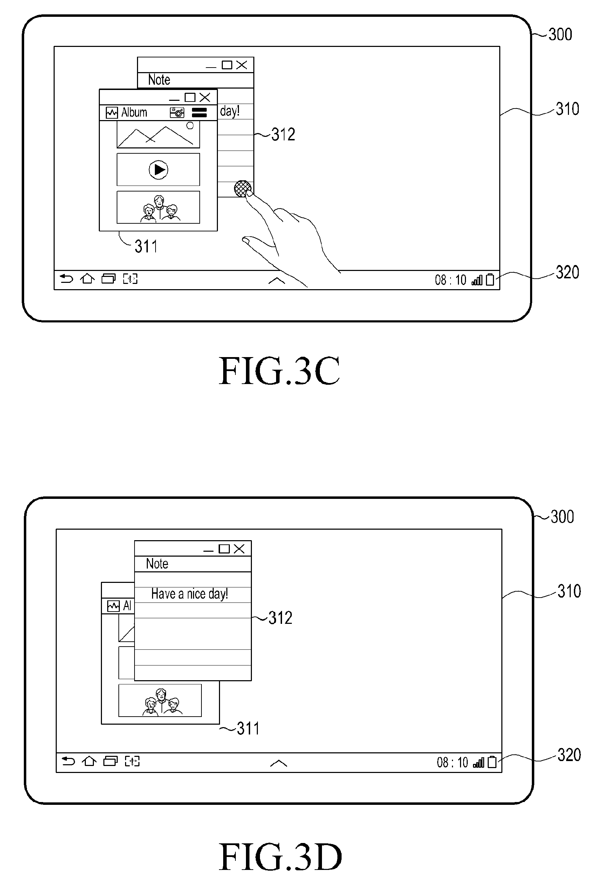

FIG. 3C illustrates a screen that explains a change in display priority according to an exemplary embodiment of the present invention.

Referring to FIG. 3C, the user touches the window 312. The controller 110 establishes the window 312 to which the most recent control event has occurred to the first place. The controller 110 also establishes the window 311 that was previously in the first place to the second place. In other words, the controller 110 decreases the place of the window 311 in the display order by one level.

FIG. 3D illustrates a screen that displays priority-changed windows according to an exemplary embodiment of the present invention.

Referring to FIG. 3D, the window 312 that places the first in the display order may be displayed to cover the window 311. Overlapped parts of the window 311 that is preceded by the window 312 with the window 311 are not displayed.

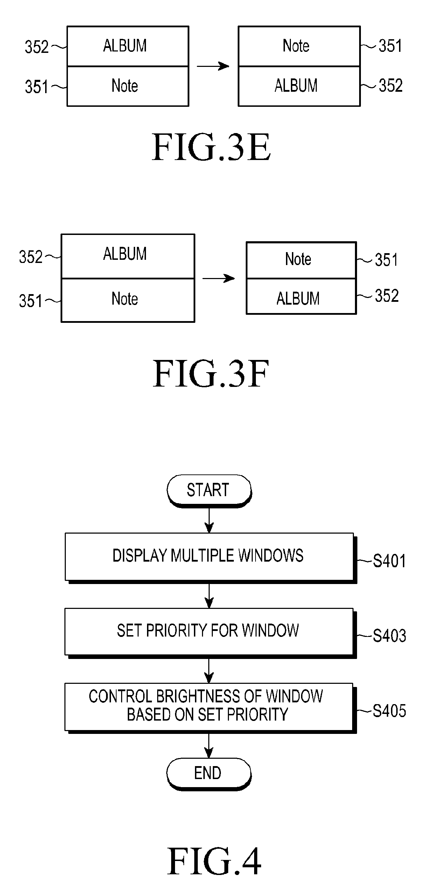

FIG. 3E illustrates task stacks according to an exemplary embodiment of the present invention.

Referring to FIG. 3E, the task stack has an application to which a most recent control event has occurred put on the top. For example, in the exemplary embodiment described above with respect to FIG. 3A, the application 311, which is an album application 352 in FIG. 3E, precedes the application 312, which is a note application 351 in FIG. 3E in a task order. On the other hand, in the exemplary embodiment in connection with FIG. 3D, the note application 351 precedes the album application 352 in the task order.

FIG. 3F illustrates display stacks according to an exemplary embodiment of the present invention.

Referring to FIG. 3F, like the task stack, the display stack has an application to which a most recent control event has occurred put on the top. For example, in the exemplary embodiment described above with respect to FIG. 3A, the album application 352 precedes the note application 351 in the display order. On the other hand, in the exemplary embodiment described above with respect to FIG. 3D, the note application 351 precedes the album application 352 in the display order. The controller 110 may establish the task stack and the display stack to be the same.

The controller 110 may determine priorities based on the display order set as described above. The controller 110 may place higher priority on a window or screen area that is placed higher in the display order, and place lower priority on a window or screen area that is placed lower in the display order. According to an exemplary embodiment of the present invention, the controller 110 may control brightnesses of windows or screen areas in the differential manner based on the set priorities. According to another exemplary embodiment of the present invention, the controller 110 may control the brightness of a window or an area that has the top priority to have the highest brightness while controlling the brightness of the remaining part of the screen to have the second highest brightness.

FIG. 4 is a flowchart illustrating a method of controlling the display device according to an exemplary embodiment of the present invention.

Referring to FIG. 4, the display device may display multiple windows in the screen at step S401. The display device may set priorities for the multiple windows at step S403. According to an exemplary embodiment of the present invention, as described above, the display device may set the priorities based on the display order of the multiple windows. According to another exemplary embodiment of the present invention, the display device may set the priorities based on user preferences, user's intention, user's gaze, or the like other than the display order.

The display device may control the brightness of the multiple windows in the differential manner based on set priorities. According to an exemplary embodiment of the present invention, the display device may set a priority for each object within a window. According to another exemplary embodiment of the present invention, the display device may divide the screen on a predetermined basis and set a priority per divided area. According to another exemplary embodiment of the present invention, the display device may determine a priority setting range with various criteria.

The display device may control brightnesses of the multiple windows in the differential manner based on the set priorities, at step S405. Accordingly, amounts of electricity to be supplied to pixels may also be controlled in the differential manner. A relatively greater amount of electricity may be supplied to a window determined to have relatively higher brightness, and a relatively lower amount of electricity may be supplied to a window determined to have relatively lower brightness. Alternatively, a relatively greater amount of electricity may be supplied to pixels of an object determined to have relatively higher brightness, and a relatively lower amount of electricity may be supplied to pixels of an object determined to have relatively lower brightness.

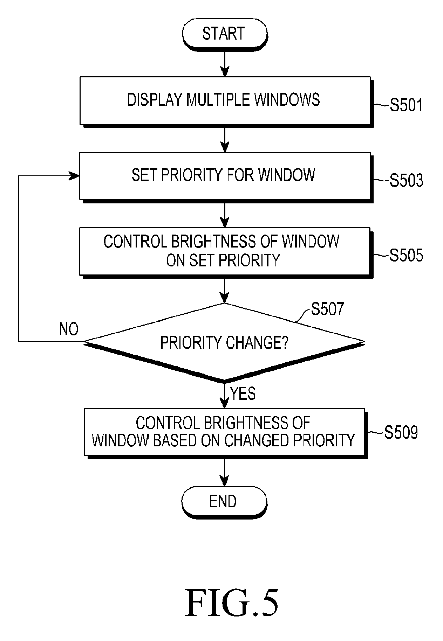

FIG. 5 is a flowchart illustrating a method of controlling the display device according to another exemplary embodiment of the present invention.

The display device may display multiple windows at step S501, set priorities for the multiple windows at step S503, and control brightnesses of the multiple windows in a differential manner based on the set priorities at step S505.

The display device may determine whether a priority for each window has been changed at step S507. If the priority has not changed, the display device maintains the set priorities for the windows at step S503. If the priority has changed, the display device may control brightnesses of the multiple windows in the deferential manner based on the changed priorities at step S509. The display device may determine the priority change based on what becomes the basis for the priorities to be set. According to an exemplary embodiment of the present invention, if the priorities were set based on the display order, the display device may determine the priority change based on a change in the display order. According to another exemplary embodiment of the present invention, if the priorities were set based on the user's gaze, the display device may determine the priority change based on a change in the user's gaze.

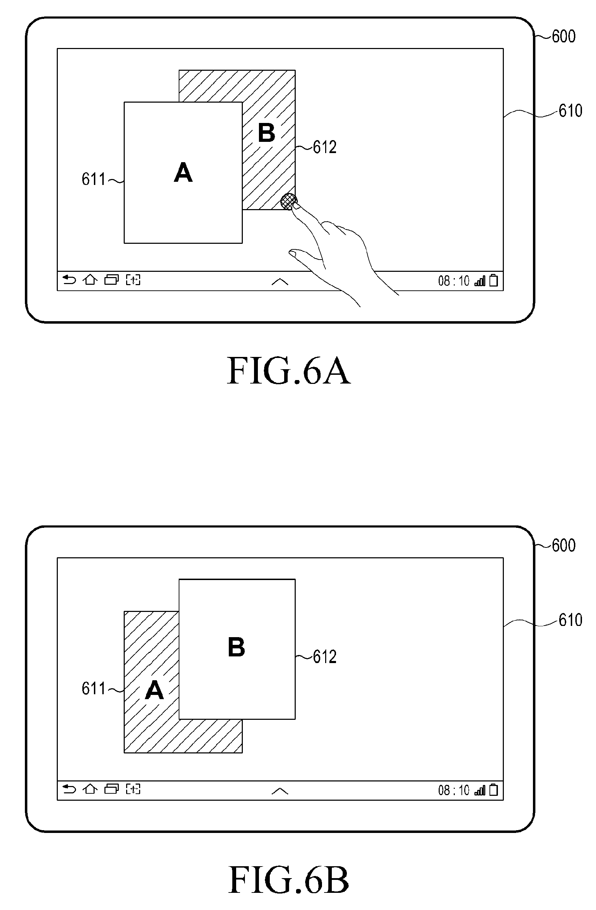

FIGS. 6A and 6B illustrate conceptual diagrams in terms of setting priorities based on a display order according to an exemplary embodiment of the present invention.

Referring to FIG. 6A, a display device 600 includes a touch screen 610. A first window 611 in which an application A is running and a second window 612 in which an application B is running are presented in the touch screen 610.

As shown in FIG. 6A, the first window 611 precedes the second window 612 in the display order. Thus, the display device 600 may set a higher priority for the first window 611 than for the second window 612. The display device 600 applies a first brightness on the first window 611 and a second brightness on the second window 611, the first brightness being brighter than the second brightness.

The user may designate the second window 612. Upon the designation of the user, as shown in FIG. 6B, the display device 600 may set a higher priority for the second window 612 than for the first window 611. The display device 600 may re-set priorities by determining that there has been a change in the display order. According to the exemplary embodiment shown in FIG. 6B, the display device 600 may set a higher priority for the second window 612 than for the first window 611. Accordingly, the display device 600 may apply the first brightness for the second window 612 and the second brightness for the first window 611.

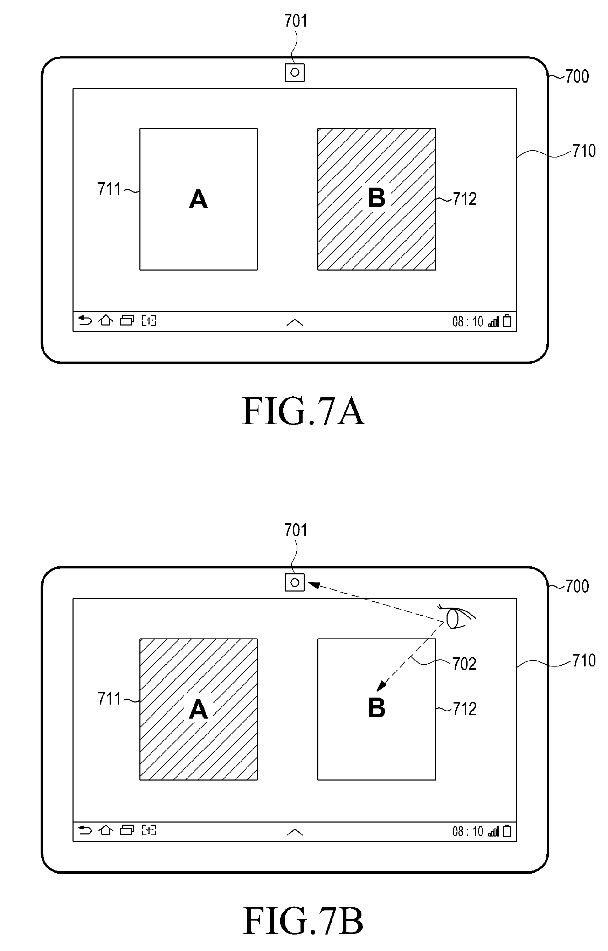

FIGS. 7A and 7B illustrate conceptual diagrams in terms of setting priorities based on the user's gaze according to an exemplary embodiment of the present invention.

Referring to FIG. 7A, a display device 700 includes a camera 701 and a touch screen 710. A first window 711 in which an application A is running and a second window 712 in which an application B is running are presented in the touch screen 710.

As shown in FIG. 7A, the first window 711 has a higher priority than that of the second window 712. Accordingly, the display device 700 may apply the first brightness for the first window 711 and the second brightness for the second window 712.

A user may gaze at the second window 712. The display device 700 may capture the user with the camera 701 and determine the direction of the user's gaze 702. In this exemplary embodiment, the display device 700 may set a higher priority for the second window 712 toward which the user 2 is gazing than for the first window 711. Accordingly, the display device 700 may apply the first brightness for the second window 712 and the second brightness for the first window 711.

As described above, the display device may implement various configurations of determining the priority change based on what becomes the basis for the priorities.

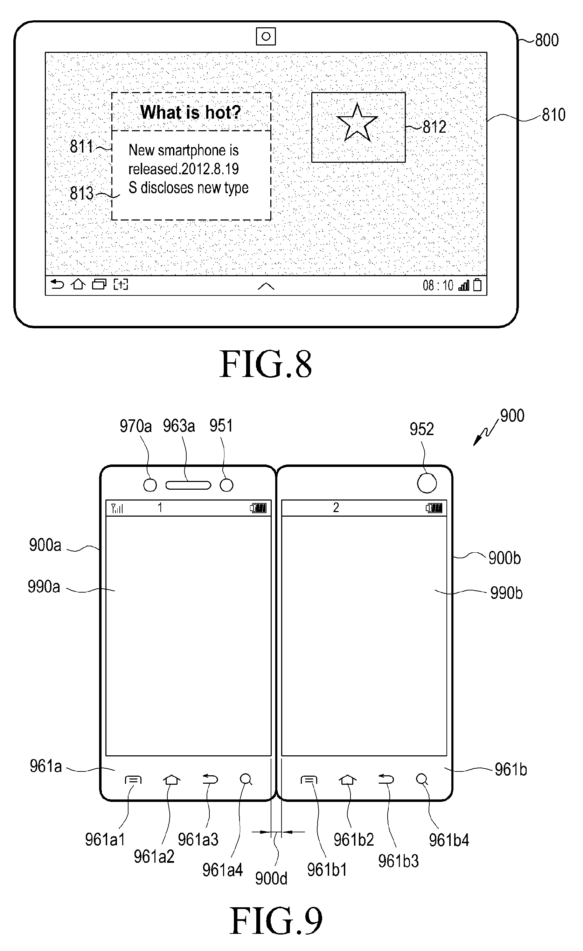

FIG. 8 illustrates a conceptual diagram of a display device according to an exemplary embodiment of the present invention.

Referring to FIG. 8, the display device 800 displays a web browser screen in a touch screen 810. The web browser screen includes first to third objects 811 to 813. The display device 800 may set a priority per object other than per window. According to the exemplary embodiment shown in FIG. 8, the display device 800 may place the top priority on the third object 813. The display device 800 may then apply the first brightness for the third object 813 and the second brightness for the remaining areas of the screen. As described above, the display device 800 may set priorities not only for windows but also for objects and apply brightnesses to the windows or objects in a differential manner based on the priorities. The display device 800 may also divide the screen on a predetermined basis, set priorities for divided areas, and apply brightnesses to the divided areas in the differential manner based on the set priorities.

FIG. 9 is a conceptual diagram of a display device according to an exemplary embodiment of the present invention.

Referring to FIG. 9, the apparatus (i.e., display device) 900 with multiple touch screens has first and second housings 900a and 900b whose sides are connected to each other by means of a hinge or a flexible plastic material. When unfolded, center parts of front faces of the first and second housings 900a and 900b are located in parallel with a distance 900d between the first touch screen 990a and the second touch screen 990b.

A first camera 951 that captures still images or videos, a proximity sensor 970a that detects an approaching user or object, and a first speaker 963a that outputs voices and/or sounds to the outside of the apparatus 900 are placed on the top of the front face of the first housing 900a. The first touch screen 990a is placed in the center part of the front face. A first button group 961 a that includes one or more buttons 961a1 to 961a4 is placed at the bottom of the front face of the first housing 990a.

The front face of the second housing 900b includes a second camera 952 that captures still images or videos on the top, the second touch screen 990b in the center part, and a second button group 961b that includes one or more buttons 961b1 to 961b4 at the bottom.

A controller of the apparatus 900 may control brightnesses of the first and second touch screens 990a and 990b in a differential manner. According to an exemplary embodiment of the present invention, the controller may control one of the first and second touch screens 990a and 990b, to which there has been a most recent input by the user, to be brighter than the other. According to another exemplary embodiment of the present invention, the controller may determine the direction of the user's gaze using the first and second cameras 951 and 952 and control one of the first and second touch screens 990a and 99b to be brighter than the other based on toward which touch screen the user is gazing. The apparatus 900 is merely illustrative, and a person of ordinary skill in the art may understand that brightnesses of two or more touch screens of an apparatus may be readily controlled in the differential manner.

A relatively greater amount of electricity may be supplied to a touch screen determined to have relatively higher brightness, and a relatively lower amount of electricity may be supplied to a touch screen determined to have relatively lower brightness. For example, if the first and second touch screens 990a and 990b receive power from a video player and the controller, respectively, the amounts of power to be supplied by the video player and the controller may be adjusted based on the priorities of the first and second touch screens 990a and 990b. According to an exemplary embodiment of the present invention, the first and second touch screens 990a and 990b may be used to present an e-mail list view and a detail view of the e-mail content, respectively. In this exemplary embodiment, the amounts of power to be supplied for the e-mail list view and the detail view may be controlled in the differential manner based on their priorities.

According to exemplary embodiments of the present invention, the display device and method of controlling the same that controls display brightness of each part of a screen in the differential manner is provided. Thus, differential brightness control is achieved e.g., by dimming an area of the screen in which the user has less interest, thereby reducing power consumption for the display device.

It will be appreciated that the exemplary embodiments of the present invention may be implemented in a form of hardware, software, or a combination of hardware and software. The software may be stored as program instructions or computer readable codes executable on the processor on a non-transitory computer-readable medium. Examples of the non-transitory computer readable recording medium include magnetic storage media (e.g., ROM, floppy disks, hard disks, etc.), and optical recording media (e.g., CD-ROMs, or DVDs). This media can be read by the computer, stored in the memory, and executed by the processor. The exemplary embodiments may be implemented by a computer or portable terminal including a controller and a memory, and the memory may be an example of the non-transitory computer readable recording medium suitable for storing a program or programs having instructions that implement exemplary embodiments of the present invention. The exemplary embodiments may be implemented by a program having codes for embodying the apparatus and method described in claims, the program being stored in a machine (or computer) readable storage medium.

The display device may receive the program from a program provider wired/wirelessly connected thereto, and store the program. The program provider may include a memory for storing programs having instructions to perform exemplary embodiments of the present invention, information necessary for exemplary embodiments of the present invention, and the like, a communication unit for wired/wirelessly communicating with the mobile communication terminal 200, and a controller for sending the program to the mobile communication terminal 200 on request or automatically.

While the invention has been shown and described with reference to certain exemplary embodiments thereof, it will be understood by those skilled in the art that various changes in form and details may be made therein without departing from the spirit and scope of the invention as defined by the appended claims and their equivalents.

## Claims

1. A method of controlling a display device, the method comprising:
displaying an application screen that includes multiple objects;
setting respective priorities for the multiple objects; and
controlling a brightness of each of the multiple objects according to the priorities.

2. The method of claim 1, wherein the controlling the brightness of each of the multiple objects according to the priorities comprises:
displaying an object having a relatively higher priority to be brighter than an object having a relatively lower priority.

3. The method of claim 1, wherein the setting of the respective priorities for the multiple objects comprises:
determining a user's gaze toward one of the multiple objects; and
setting priorities for the multiple objects based on the determined user's gaze.

4. The method of claim 3, wherein the setting of the respective priorities for the multiple objects comprises:
placing a top priority on an object toward which the user's gaze is directed.

5. The method of claim 4, wherein the setting of the respective priorities for the multiple objects comprises:
establishing the object having the top priority to have a relatively high brightness and establishing other areas to have a relatively low brightness.

6. A display device, the display device comprising:
a display unit configured to display an application screen that includes multiple objects; and
a controller configured to set respective priorities for the multiple objects and to control a brightness of each of the multiple objects according to the priorities.

7. The display device of claim 6, wherein the controller is configured to display an object having a relatively higher priority to be brighter than an object having a relatively lower priority.

8. The display device of claim 6, wherein the controller is configured to establish an object having a top priority to have a relatively high brightness and establish other areas than the object to have a relatively low brightness.

9. The display device of claim 6, further comprising:
a camera unit,
wherein the controller is configured to determine a user's gaze toward one of the multiple objects based on an image captured by the camera unit, and to set priorities for the multiple objects based on the determined user's gaze.

10. The display device of claim 9, wherein the controller is configured to place a top priority on an object toward which the user's gaze is directed.

11. A computer readable storage medium having stored thereon computer executable instructions configured to implement the method of any of claims 1 to 5.
